# EUROPÄISCHE PATENTSCHRIFT

(11) **EP 1 339 904 B1**
(45) Veröffentlichungstag und Bekanntmachung des Hinweises auf die Patenterteilung: **12.01.2005**
(21) Anmeldenummer: 01994699.5
(22) Anmeldetag: 22.11.2001
(51) Int. Cl.: D03D 1/00, B60R 22/34

(54) **KRAFTBEGRENZERRETRACTOR MIT DARAUF ABGESTIMMTEM GURTBAND**
FORCE LIMITING RETRACTOR WITH MATCHING BELT WEBBING
RETRACTEUR LIMITEUR DE FORCE AVEC SANGLE DE CEINTURE CORRESPONDANTE

(30) Priorität: 29.11.2000 DE 20020251 U
(43) Veröffentlichungstag der Anmeldung: 03.09.2003
(73) Patentinhaber: AUTOLIV DEVELOPMENT AB, 447 83 Vargarda (SE)
(72) Erfinder: SINGER, Klaus-Peter, 22399 Hamburg (DE)
(74) Vertreter: Müller, Karl-Ernst, Dr., Dipl.-Ing.
(86) Internationale Anmeldenummer: PCT/EP2001/013573
(87) Internationale Veröffentlichungsnummer: WO 2002/044451

(56) Entgegenhaltungen:
- US-A- 4 710 423
- US-A- 5 478 636
- US-A- 5 547 143
- US-A- 5 769 130

## Beschreibung

Die Erfindung betrifft einen Sicherheitsgurtaufroller mit einem fahrzeugsensitiven und/oder gurtbandsensitiven Blockiersystem für die Gurtwelle als Träger eines auf der Gurtwelle aufgewickelten Gurtbandes, wobei der Sicherheitsgurtaufroller mit einer integrierten Kraftbegrenzungseinrichtung für die bei Blockierung des Sicherheitsgurtaufrollers im Gurtband auftretende Gurtbandkraft versehen ist. Ein derartiger Sicherheitsgurtaufroller ist beispielsweise aus der US-A- 5 547 143 bekannt.

Bisher hat die Nutzung einer Kraftbegrenzung innerhalb eines Sicherheitsgurtaufrollers nicht dazu geführt, das Gurtband in seiner Ausgestaltung an die durch den Einsatz einer Kraftbegrenzungseinrichtung in dem Sicherheitsgurtaufroller geänderten Kraftverhältnisse anzupassen. Ein weiterer Aspekt besteht darin, daß bei herkömmlichen Gurtbändern das gewebte Gurtband einer besonderen Ausrüstung insbesondere durch Thermofixieren unterzogen wird mit dem Ziel, das Dehnungsverhalten des Gurtbandes so einzurichten, daß mit steigender Belastung oder ab einem vorgegebenen Belastungszustand die Dehnung des Gurtbandes größer wird, um eine Vorverlagerung des angeschnallten Insassen zu ermöglichen.

Der Erfindung liegt daher die Aufgabe zugrunde, ein der beim Sicherheitsgurtaufroller vorgesehenen Kraftbegrenzung angepaßtes Gurtband zu schaffen.

Die Lösung dieser Aufgabe ergibt sich aus dem Hauptanspruch; vorteilhafte Ausgestaltungen und Weiterbildungen der Erfindung sind in den Unteransprüchen angegeben.

Im einzelnen schlägt die Erfindung vor, daß das eine Bruchlast von weniger als 20 kN aufweisende Gurtband weniger als 35 in seiner Längsrichtung verlaufende Kettfäden pro 10 mm Gurtbandbreite aufweist und die in Körperbindung eingewebten Schußfäden als monofile Fäden ausgebildet sind und daß das gewebte Gurtband eine lineare Dehnungscharakteristik aufweist.

Hierzu ist es aus der US-A-5 478 636 bekannt, ein Gurtband für ein Rückhaltesystem in einem Fahrzeug schwächer als herkömmliche Gurtbänder, d. h. bis zu einer Bruchlast von weniger als 1.000 kgf, d. h. von weniger als 20 kN zu dimensionieren, wobei die Anzahl der Kettfäden ins Längsrichtung des Gurtbandes weniger als 35 pro 10 mm Gurtbandbreite beträgt und die Schußfäden in Köperbindung eingewebt sind. Die US-A-5 478 636 sieht allerdings vor, mit der vorgeschlagenen Ausgestaltung des Gurtbandes selbst eine Kraftbegrenzung einzurichten, wofür ein entsprechend eingestelltes Dehnungsverhalten Voraussetzung ist.

Die Erfindung macht sich den vor einem anderen technischen Hintergrund zu beurteilenden Aufbau des aus der US-A-5 478 636 bekannten Gurtbandes zu Nutze, wobei das gewebte Gurtband eine lineare Dehnungscharakteristik aufzuweisen hat. Dabei macht es die Verringerung der Bruchlast möglich, die Anzahl der in Längsrichtung des Gurtbandes verlaufenden Kettfäden um etwa 40 % gegenüber herkömmlichen Gurtbändern auf weniger als 35 Kettfäden pro 10 mm Gurtbandbreite zu verringern. Mit dieser geringeren Anzahl von Kettfäden ist der Vorteil verbunden, daß sich gegenüber dem herkömmlichen Gurtband eine geringere Längssteifigkeit des Gurtbandes einstellt; weiterhin ist durch den verminderten Materialeinsatz das Gewicht des Gurtbandes verringert, und schließlich ergibt sich auch eine geringere Gurtbandstärke dadurch, daß die trotz der verringerten Anzahl der Kettfäden eine ausreichende Quersteifigkeit bewirkenden monofilen Schußfäden sich beim Weben zwischen die mit größerem Abstand zueinander verlaufenden Kettfäden legen. Alle drei Faktoren führen gemeinsam zu einer Verbesserung des Anlege- und Ablegekomforts wie auch des Tragekomforts des Gurtbandes. Die lineare Dehnungscharakteristik des Gurtbandes führt dazu, daß es neben der durch die Kraftbegrenzungseinrichtung im Gurtaufroller eingestellten Vorverlagerung des angeschnallten Insassen nicht zu einer Beeinflussung dieses Vorverlagerungseffektes durch eine unberechenbare Dehnung des Gurtbandes kommt. Soweit also die Dehnung des gewebten Gurtbandes der Dehnung des für die Herstellung der Kettfäden verwendeten Grundmaterials entsprechen kann, ist damit eine Vereinfachung bei der Ausrüstung des gewebten Gurtbandes durch Thermofixieren gegeben.

Hierzu ist es aus der DE 38 41 687 Al bekannt, in einem Sicherheitsgurtsystem außerhalb des Sicherheitsgurtaufrollers an dem schloßfreien Ende des Beckengurtabschnittes einen Gurtkraftbegrenzer anzuordnen, wobei das eingesetzte Gurtband eine geringere Dehnung als übliche Gurtbänder aufweisen soll, damit der wegen der im Belastungsfall nicht vorhersehbaren Dehnung nicht gezielt ablaufende Vorverlagerungsweg in annehmbaren Grenzen bleibt.

In technischer Hinsicht führt die reduzierte Gurtbanddicke zu einem kleineren Durchmesser der Gurtwelle, so daß die Einbaumaße eines entsprechend ausgerüsteten Sicherheitsgurtaufrollers reduziert sind. Gleichzeitig ist auch der bei Belastung des auf der Gurtwelle aufgewickelten Gurtbandes auftretende Filmspuleneffekt geringer und damit ist eine unkontrollierte Vorverlagerung des angeschnallten Insassen reduziert.

Schließlich sind mit der Erfindung auch wirtschaftliche Vorteile verbunden; so ist aufgrund es geringeren Materialeinsatzes und der aufgrund der geringeren Anzahl von Kettfäden möglichen erhöhten Webgeschwindigkeit der Herstellungsaufwand für die Webung des Gurtbandes verringert. Auch die nachfolgend erforderliche Ausrüstung des Gurtbandgewebes durch Thermofixierung ist weniger aufwendig, da beispielsweise ein vorzugebendes Dehnungsverhalten nicht mehr eingestellt werden muß.

Der DE 31 13 701 ist bereits die Anregung zu entnehmen, ein Gurtband geringer Dicke einzusetzen, um dadurch Volumen und Gewicht der Sicherheitsgurtaufroller zu reduzieren; hierbei soll jedoch ausdrücklich die Festigkeit des Gurtbandes beibehalten sein, so daß von dieser Druckschrift keine Anregung in Richtung der erfindungsgemäßen Lehre ausgehen kann. Soweit in dieser Druckschrift eine denkbare Verringerung der Anzahl der Kettfäden angesprochen ist, so wird diese angedachte Verringerung der Anzahl von Kettfäden kompensiert durch eine Vergrößerung der Anzahl der Schußfäden.

In ähnlicher Weise ist auch in der DE 41 04 516 A1 die Möglichkeit einer Reduzierung der Anzahl der Kettfäden angesprochen, allerdings soll diese Reduzierung kompensiert werden durch den Einsatz von derart ausgerüsteten Schußfäden, daß deren Dehnbarkeit vor dem Bruch maßgeblich erhöht ist. Da durch den Einsatz derartiger spezieller Schußfäden die Haltbarkeit der Kettfäden erhöht sein soll, soll die Festigkeit des so beschaffenen Gurtbandes in Vergleich mit herkömmlichen Gurtbändern beibehalten werden. Damit gibt auch diese Druckschrift keine Anregung in Richtung auf die beanspruchte technische Lehre.

Der Einsatz monofiler Schußfäden zur Einstellung einer ausreichenden Quersteifigkeit eines Gurtbandes ist aus der DE 33 45 508 A1 grundsätzlich bekannt, ohne daß allerdings ein Zusammenhang zu der Anzahl der Kettfäden hergestellt ist.

## Patentansprüche

1. Sicherheitsgurtaufroller mit einem fahrzeugsensitiven und/oder gurtbandsensitiven Blockiersystem für die Gurtwelle als Träger eines auf der Gurtwelle aufgewickelten Gurtbandes, wobei der Sicherheitsgurtaufroller mit einer integrierten Kraftbegrenzungseinrichtung für die bei Blockierung des Sicherheitsgurtaufrollers im Gurtband auftretende Gurtbandkraft versehen ist, **dadurch gekennzeichnet, daß** das eine Bruchlast von weniger als 20 kN aufweisende Gurtband weniger als 35 in seiner Längsrichtung verlaufende Kettfäden pro 10 mm Gurtbandbreite aufweist und die in Köperbindung eingewebten Schußfäden als monofile Fäden ausgebildet sind und daß das gewebte Gurtband eine lineare Dehnungscharakteristik aufweist.

2. Sicherheitsgurtaufroller nach Anspruch 1, **dadurch gekennzeichnet, daß** die Dehnung des gewebten Gurtbandes der Dehnung des für die Herstellung der Kettfäden verwendeten Grundmaterials entspricht.

3. Sicherheitsgurtaufroller nach Anspruch 1 oder 2, **dadurch gekennzeichnet, daß** das Grundmaterial für die Herstellung des Gurtbandgewebes ein Polyester ist.

## Claims

1. A safety belt retractor with a vehicle-sensitive and/or belt strap-sensitive locking system for the belt shaft, which forms the carrier for a belt strap wound thereon, the safety belt retractor being provided with an integrated force limiting device for the belt strap force which occurs in the belt strap on locking of the safety belt retractor, **characterised in that** the belt strap, which has a breaking load of less than 20 kN has less than 35 warp threads extending in its longitudinal direction per 10 mm belt strap width and the weft threads woven in a twill weave are in the form of monofilament threads and **in that** the woven belt strap has a linear expansion characteristic.

2. A safety belt retractor according to claim 1, **characterised in that** the expansion of the woven belt strap corresponds to the expansion of the basic material used for making the warp threads.

3. A safety belt retractor according to claim 1 or 2, **characterised in that** the basic material for making the belt strap fabric is a polyester.

## Revendications

1. Enrouleur de ceinture de sécurité présentant, pour la broche de ceinture, un système de blocage réagissant au véhicule et/ou à la sangle de ceinture et servant de support à une sangle de ceinture enroulée sur la broche de ceinture, l'enrouleur de ceinture de sécurité étant muni d'un rétracteur limiteur de la force générée dans la sangle de ceinture en cas de blocage de l'enrouleur de ceinture de sécurité, **caractérisé en ce que** la sangle de ceinture ayant une charge de rupture inférieure à 20 kN présente moins de 35 fils de chaîne dans le sens longitudinal pour une largeur de 10 mm de la sangle de ceinture, et **en ce que** les fils de trame entrelacés en cotte de mailles sont conformés en fils monofilaments et **en ce que** la sangle de ceinture tissée présente une caractéristique d'allongement linéaire.

2. Enrouleur de ceinture de sécurité selon la revendication 1, **caractérisé en ce que** l'allongement de la sangle de ceinture tissée correspond à l'allongement de la matière de base utilisée pour la fabrication des fils de chaîne.

3. Enrouleur de ceinture de sécurité selon la revendication 1 ou 2, **caractérisé en ce que** la matière de base servant à la fabrication du tissu de la sangle de ceinture est un polyester.
